# EUROPEAN PATENT SPECIFICATION

(11) **EP 2 789 851 B1**
(45) Date of publication and mention of the grant of the patent: **20.01.2016**
(21) Application number: 12856233.7
(22) Date of filing: 02.11.2012
(51) Int. Cl.: H02G 13/00, F03D 11/00

(54) **WIND TURBINE BLADE AND WIND TURBINE GENERATOR**
WINDTURBINEBLATT UND WINDTURBINEGENERATOR
PALE D'ÉOLIENNE ET GENERATEUR POUR ÉOLIENNE

(30) Priority: 09.12.2011 WO PCT/JP2011/006902; 09.12.2011 WO PCT/JP2011/078602; 24.02.2012 WO PCT/JP2012/001310
(43) Date of publication of application: 15.10.2014
(73) Proprietor: Mitsubishi Heavy Industries, Ltd., Tokyo 108-8215 (JP)
(72) Inventor: FUJIOKA, Hideyasu, Tokyo 108-8215 (JP); SHIBATA, Masaaki, Tokyo 108-8215 (JP); CREMER, Andreas, London, Greater London W1K 6WL (GB)
(74) Representative: Intès, Didier Gérard André
(86) International application number: PCT/JP2012/078434
(87) International publication number: WO 2013/084634

(56) References cited:
- EP-A1- 1 830 063
- EP-A2- 2 267 280
- WO-A1-2007/072961
- WO-A1-2011/096500
- JP-B2- 4 355 793
- US-A1- 2010 329 865

## Description

### [Technical Field]

The present disclosure relates to a wind turbine blade and a wind turbine generator which include a lightning protection function.

### [Background Art]

Generally, a wind turbine generator has a configuration in which a nacelle is supported at an upper part of a tower and a rotation blade attached to a hub is supported rotatably to the nacelle, where motion energy of wind is converted into rotational energy of a wind turbine blade (precisely, an entire rotor including the wind turbine blade), and then the rotational energy is converted into electrical power in a generator. EP2267280 describes such a wind turbine.

In recent years, such a wind turbine generator has been grown in size from the perspective of improving the power generation efficiency and a huge wind turbine generator whose rotor has a diameter of more than a hundred and several tens meters is edging closer to a practical use. In a wind turbine generator with a rotor of a large diameter, a tip of a wind turbine blade passes at a position considerably further from the ground surface (a high altitude) in accordance with the rotation of the rotor. Thus, the design of a lightning protection for a wind turbine blade is important.

As a wind turbine blade with a lightning protection, a wind turbine blade including a solid receptor (lightning receiving part) which forms a blade tip and a down-conductor which directs lightning current to a blade root from the receptor is known.

For instance, Patent Documents 1 to 3 disclose a wind turbine blade configured to direct lightning current from a solid receptor which constitutes a tip part of a wind turbine generator to a blade root via a down-conductor.

Although not relevant to a wind turbine blade including a solid receptor which forms a blade tip, Patent Documents 4 to 8 disclose a variety of configurations of a wind turbine with a lightning protection.

For instance, Patent Documents 4 to 6 disclose a wind turbine blade configured to direct lightning current toward a blade root from a receptor provided at a blade tip via a down-conductor of a sheet form or a mesh form. Also, Patent Document 7 discloses a wind turbine blade configured to direct lightning current toward a blade root from a receptor fixed to an anchor block provided in a space inside a blade tip via a down conductor. Moreover, Patent Document 8 discloses a wind turbine blade which is configured to direct lightning current toward a blade root from a receptor of a conductive or a semi-conductive type provided inside a blade tip via a down conductor.

### [Citation List]

### [Patent Literature]

[Patent Document 1]
   JP4197244B
[Patent Document 2]
   WO2005/031158A
[Patent Document 3]
   JP2011-163132A
[Patent Document 4]
   US2008/145229A
[Patent Document 5]
   US7883321B
[Patent Document 6]
   US2010/0329865A
[Patent Document 7]
   US6979179B
[Patent Document 8]
   US2010/0329881A

### SUMMARY

### [Technical Problem]

In recent years, a wind turbine blade has been grown in length in accordance with increasing size of a wind turbine generator. Thus, for further improvement of the lightning protection function of a wind turbine blade, it is desirable to improve reliability of electric connection between a receptor and a down conductor. Also, as it is required to improve durability of a wind turbine blade in accordance with growing size in length of a wind turbine blade, it is desirable to develop a wind turbine blade with excellent connection strength between a receptor which forms a blade tip and a blade body.

In this regard, Patent Documents 1 to 8 do not disclose any measure for improving connection strength between a receptor which forms a blade tip and a blade body, and reliability of electric connection between a receptor and a down conductor.

An object of at least one embodiment of the present invention is to provide a wind turbine blade and a wind turbine generator which enable improving connection strength between a receptor which forms a blade tip and a blade body, and reliability of electric connection between a receptor and a down conductor.

### [Solution to Problem]

A wind turbine blade according to one embodiment of the present invention comprises:
a blade body extending from a blade root along a blade longitudinal direction;
a metal receptor which is connected to an end of the blade body opposite to the blade root and which forms a blade tip; and
a metal foil which extends from a connection part of the metal receptor and the end of the blade body toward the blade root along the blade longitudinal direction and which is configured to direct lightning current from the metal receptor toward the blade root, wherein, at the connection part, a fiber-reinforced plastic which forms at least a part of the blade body is fastened to the metal receptor in a state where at least the fiber-reinforced plastic and the metal receptor overlap with each other, while an end portion of the metal foil is electrically connected to the metal receptor.

In the above wind turbine blade, a fiber-reinforced plastic which forms at least a part of the blade body is fastened to the metal receptor which forms a blade tip in a state where at least the fiber-reinforced plastic and the metal receptor overlap with each other. Herein, a state where at least the fiber-reinforced plastic and the metal receptor overlap with each other includes a state where other members are further overlapped in addition to the fiber-reinforced plastic and the metal receptor. As the fiber-reinforced plastic has high strength, fastening the fiber-reinforced plastic and the metal receptor in the state where at least the fiber-reinforced plastic and the metal receptor overlap with each other makes it possible to improve connection strength between the metal receptor which forms the blade tip and the blade body. Especially, thanks to the state where at least the fiber-reinforced plastic and the metal receptor which are fastened to each other overlap with each other, it is possible to secure a contact surface of a large area between the fiber-reinforced plastic and the metal receptor at the connection part along a blade longitudinal direction, and to maintain high connection strength which enables withstanding a torsion moment of a wind turbine blade caused by wind load etc received at the wind turbine blade.

Further, as an end portion of the metal foil is electrically connected to the metal receptor at the connection part, it is possible to improve reliability of electric connection between the metal foil serving as a down conductor and the metal receptor.

In some embodiments, a wind turbine blade may further comprise a first metal plate which is fastened to the metal receptor together with the end portion of the metal foil in a state where the first metal plate overlaps with the end portion of the metal foil and the metal receptor at an opposite side of the metal receptor across the metal foil.

In this manner, the metal foil, the first metal plate, and the metal receptor are fastened together in a state where the metal foil is pressed against the side of the metal receptor by the first metal plate, and thus are fixed in a state where the metal foil is certainly in contact with the metal receptor. As a result, it is possible to further improve reliability of electric connection between the metal foil and the metal receptor.

In some embodiments, a wind turbine blade may further comprise a second metal plate which is fastened to the metal receptor together with the first metal plate and the metal foil, the second metal plate being sandwiched between the metal foil and the metal receptor at the connection part.

By fastening the first metal plate, the second metal plate, the metal foil and the metal receptor together in a state where at least a part of the metal foil is sandwiched between the first metal plate and the second metal plate, it is possible to fix the metal foil stably and to secure electric connection between the metal foil and the metal receptor via the second metal plate.

In some embodiments, the first metal plate and the second metal plate may extend to a halfway position of the blade body from the connection part, and at the connection part, the fiber-reinforced plastic may be fastened to the metal receptor together with the metal foil, the first metal plate, and the second metal plate.

As the first metal plate and the second metal plate which are fastened together to the receptor extend to a halfway position of the blade body, it is possible to suppress stress generated at the connection part, which contributes to improvement of connection strength.

In some embodiments, the metal receptor, the fiber-reinforced plastic, the metal foil, the first metal plate and the second metal plate may be fastened together by a bolt.

As a result, it is possible to easily fasten the metal receptor, the fiber-reinforced plastic, the metal foil, the first metal plate, and the second metal plate by a bolt. Also, because unfastening is easy, it is possible to easily perform exchange and repair of each member thereof.

In some embodiments, a first recess and a second recess may be formed at an end part of the metal receptor, the second recess being disposed adjacent to the first recess across a step and being shallower than the first recess, wherein the fiber-reinforced plastic, the metal foil, the first metal plate and the second metal plate together engage with the first recess, and are fastened to the metal receptor at the first recess, and wherein the metal foil, the first metal plate and the second metal plate together engage with the second recess, and are fastened to the metal receptor at the second recess.

In this manner, it is possible to achieve appropriate contact between each member and the metal receptor at the connection part while enabling improving connection strength and securing electric connection. That is, as the fiber-reinforced plastic, the metal foil, the first metal plate and the second metal plate together engage with the first recess, and are fastened to the metal receptor at the first recess, it is possible to have the fiber-reinforced plastic contact the receptor with surfaces and thus to secure electrical connection between the metal foil and the metal receptor via the second metal plate.

In some embodiments, a wind turbine blade may further comprise an elastic adhesive filled between the first recess and the fiber-reinforced plastic.

As a result, it is possible to further improve connection strength between the fiber-reinforced plastic and the metal receptor, and to suppress occurrence of a crack caused by fatigue in the metal receptor, the fiber-reinforced plastic and surrounding members at the contact part thanks to the elastic function of the elastic adhesive.

In some embodiments, at least one first drain hole may be formed at the end of the blade body closer to the connection part.

Drain pooled inside the blade body is moved toward the blade tip by centrifugal force which accompanies rotation of the wind turbine blade. Thus, by providing a first drain hole at the end of the blade body, it is possible to smoothly discharge the drain from the first drain hole.

In some embodiments, the metal receptor may include a suction side portion and a pressure side portion, each of the suction side portion and the pressure side portion having a halved form, and the suction side portion and the pressure side portion may be fastened together.

As a result of forming the metal receptor to have a halved form, it is possible to easily attach the metal plates, the metal foil, etc to the metal receptor.

In some embodiments, the metal receptor may have a hollow space between the suction side portion and the pressure side portion, and at least one second drain hole may be formed at a tip part of the metal receptor, and be in communication with the hollow space.

As a result, it is possible to smoothly discharge the drain pooled inside the metal receptor from the hollow space through the second drain hole.

In some embodiments, a surface of the metal receptor may be coated by an insulator so that a tip part of the metal receptor is exposed.

As a result, it is possible to make lightning tend to hit the tip part of the metal receptor, and thus to avoid lightning hitting the blade body.

In some embodiments, at least one of the metal receptor or the metal foil may be formed of copper or alloyed copper.

By forming at least one of the metal receptor or the metal foil of copper or alloyed copper which have high conductive property, it is possible to smoothly direct lightning current toward the blade root.

In some embodiments, the fiber-reinforced plastic may be provided at each of a suction side and a pressure side of the blade body, wherein the blade body further includes a shear web which is disposed between the fiber-reinforced plastic at the suction side and the fiber-reinforced plastic at the pressure side, and which extends to the connection part along the blade longitudinal direction, and wherein an end face at a blade body side of the metal receptor is in contact with a tip face of the shear web.

As a result of providing a shear web between the fiber-reinforced plastics respectively disposed at the suction side and the pressure side of the blade body, it is possible to support the load increased by the metal receptor by the shear web.

In some embodiments, the blade body may be covered by a protection layer formed of fiber-reinforced plastic.

As a result, it is possible to suppress damage to the blade body.

In some embodiments, a wind turbine generator comprising the above wind turbine blade is provided.

### [Advantageous Effects]

According to one embodiment of the present invention, as a fiber-reinforced plastic which forms at least a part of the blade body is fastened to the metal receptor in a state where at least the fiber-reinforced plastic and the metal receptor which forms the blade tip overlap with each other, it is possible to improve connection strength between the metal receptor and the blade body.

Also, as an end portion of the metal foil is electrically connected to the metal receptor at the connection part between the metal receptor and the blade body, it is possible to improve reliability of electric connection between the metal foil serving as a down conductor and the metal receptor.

### BRIEF DESCRIPTION OF DRAWINGS

[FIG.1] Fig. 1 is an illustration of an exemplary configuration of a wind turbine generator.
[FIG. 2] Fig. 2 is an oblique perspective view of a wind turbine blade according to one embodiment.
[FIG. 3A] Fig. 3A is a cross-sectional view along the line A-A of Fig. 2.
[FIG. 3B] Fig. 3B is a cross-sectional view along the line B-B of Fig. 2.
[FIG. 4] Fig. 4 is a plan view of a tip side of a wind turbine blade according to one embodiment.
[FIG. 5] Fig. 5 is a cross-sectional view of a tip side of the wind turbine blade according to one embodiment.
[FIG. 6] Fig. 6 is an oblique perspective view of a metal receptor.
[FIG. 7] Fig. 7 is an oblique perspective view of an inside of a metal receptor.
[FIG. 8] Fig. 8 is an oblique perspective view of a tip side of a wind turbine blade according to one embodiment.
[FIG. 9] Fig. 9 is a cross-sectional view of a tip side of the wind turbine blade according to another embodiment.
[Fig. 10] Fig. 10 is a cross-sectional view of a tip side of a wind turbine according to another embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

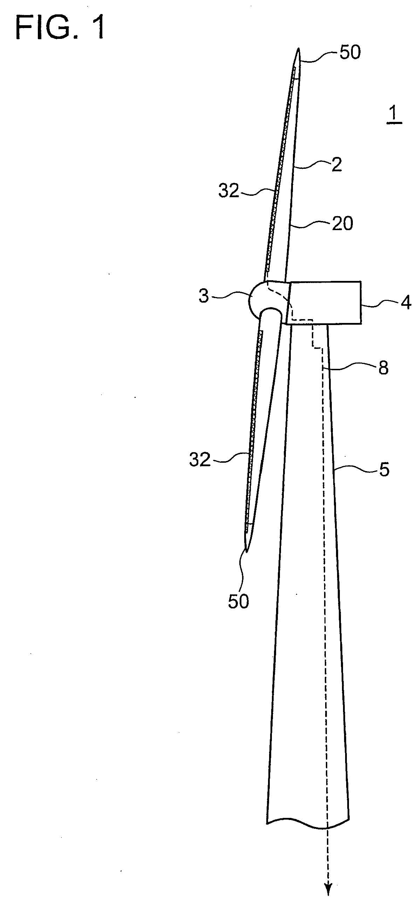

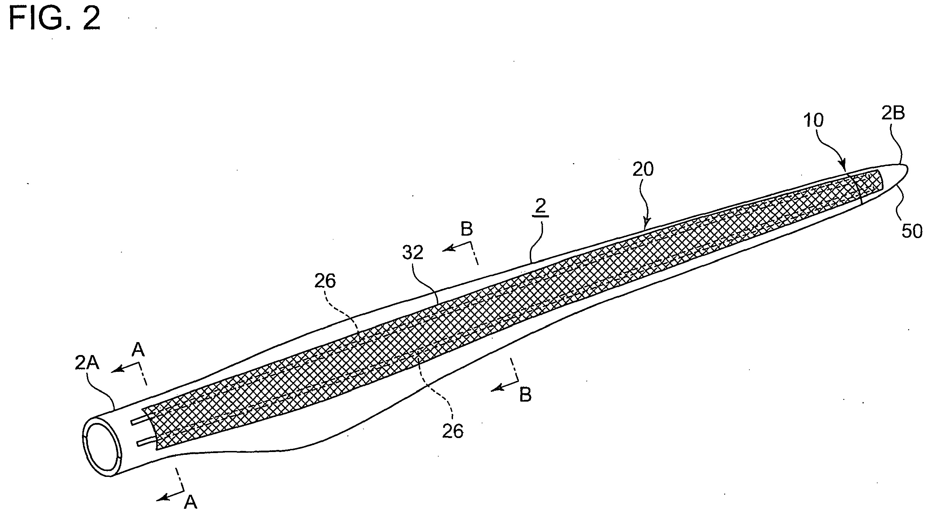

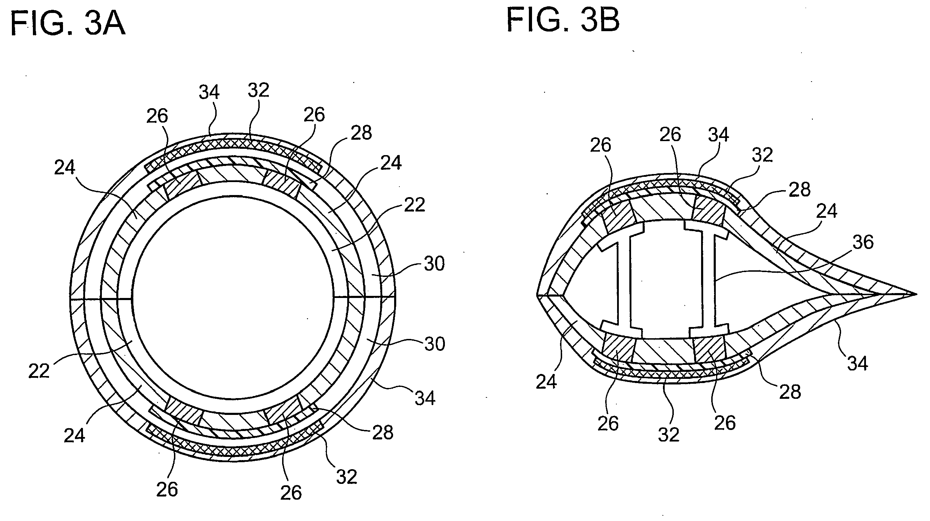

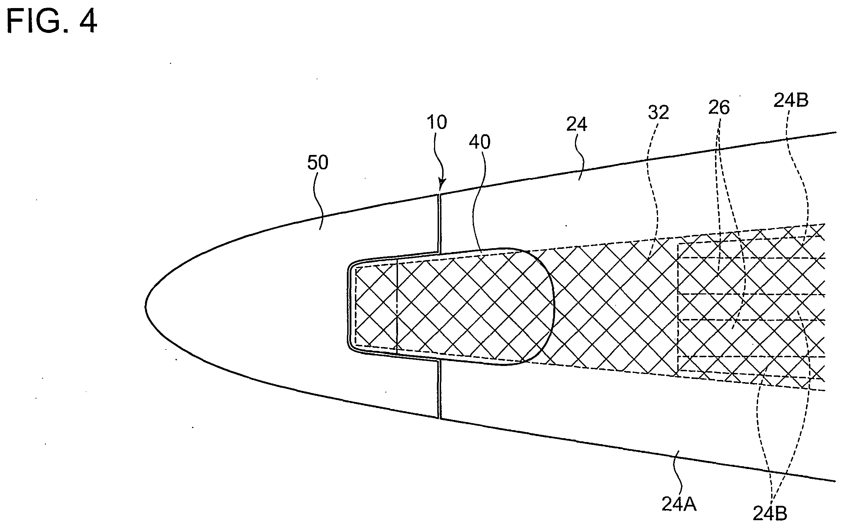

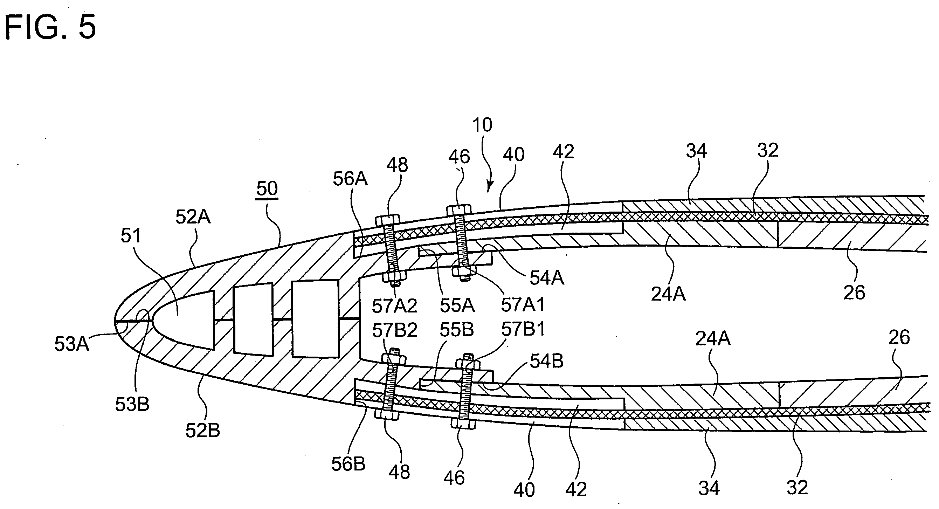

Fig. 1 is an illustration of an exemplary configuration of a wind turbine generator. Fig. 2 is an oblique perspective view of a wind turbine blade according to one embodiment. Fig. 3A is a cross-sectional view along the line A-A of Fig. 2, and Fig. 3B is a cross-sectional view along the line B-B of Fig. 2. Fig. 4 is a plan view of a tip side of a wind turbine blade according to one embodiment. Fig. 5 is a cross-sectional view of a tip side of the wind turbine blade according to one embodiment.

As shown in Fig. 1, a wind turbine generator 1 includes at least one wind turbine blade 2, a hub 3 to which the wind turbine blade 2 is attached, a nacelle 4 which supports a rotor including the wind turbine blade 2 and the hub 3, and a tower 5 which rotatably supports the nacelle 4. Herein, rotation of the rotor is inputted to a generator not shown, and electric power is generated in the generator.

The tower 5 is provided vertically on the ocean in the case of an offshore wind turbine, and on a base provided on the land in the case of an onshore wind turbine.

As shown in Fig. 1 and Fig. 2, the wind turbine blade 2 includes a blade body 20 extending from a blade root 2A along a blade longitudinal direction and a metal receptor 50 which is connected to an end of the blade body 20 and which forms a blade tip 2B. At least a part of the blade body 20 is formed of a fiber-reinforced plastic. Also, the wind turbine blade 2 includes a metal foil 32 which extends from a connection part 10 between the metal receptor 50 and the end of the blade body 20 toward the blade root 2A along the blade longitudinal direction. The metal foil 32 is configured to direct lightning current from the metal receptor 50 toward the blade root 2A, serving as a down conductor. In one embodiment, the metal foil 32 is electrically connected to another down conductor which runs through the blade root 2A, the hub 3, the nacelle 4 and the tower 5. When lightning hits the metal receptor 50, the lightning current from the metal receptor 50 is introduced to an earth terminal attached to the tower 5 from the metal foil 32 via the other down conductor.

An exemplary configuration of the wind turbine blade 2 will be described in detail in reference to Fig. 3 and Fig. 4.

In one embodiment, as shown in Fig. 3A, a wind turbine blade 2 at the blade root 2A is composed of an inner blade reinforcement member 22, an blade forming member 24 with a spar cap 26, an insulation layer 28, an outer blade reinforcement member 30, a metal foil 32, and a protection layer 34 arranged in this order from inside in the thickness direction. Also, in one embodiment as shown in Fig. 3B, a wind turbine blade 2 at the blade center part (airfoil part) is composed of a blade forming member 24 with a spar cap 26, an insulation layer 28, a metal foil 28 and a protection layer 34 arranged in this order from inside in the thickness direction.

In Fig. 3A and Fig 3B, thickness and size of each component are varied from an actual wind turbine blade for convenience in explanation.

An inner reinforcement member 22 extends from the blade root 2A to a halfway position of the blade body 20 and includes, for instance, a layer of a glass fiber-reinforced plastic.

A spar cap 26 functions mainly as a main reinforcement member for withstanding bending moment applied to the wind turbine blade 2, extending in the longitudinal direction of the wind turbine blade 2 from the blade root 2A to the end of the blade body 20 along a shear web 36 (see Fig. 2). Specifically, two spar caps are provided at each of the suction side and the pressure side corresponding to two shear webs provided at each of the leading edge side and the trailing edge side, which makes four spar caps in total. Also, the spar cap 26 is for instance formed of a carbon fiber-reinforced plastic. Herein, the end of the blade body 20 is an end which is disposed at the side of the blade tip 2B of the blade body 20 and to which the metal receptor 50 is connected.

The shear web (spar member) 36 is disposed between the spar cap 26 at the suction side and the spar cap 26 at the pressure side which face each other, extending in the blade longitudinal direction from the blade root 2A to the end of the blade body 20. Herein, the shear web 36 may be composed of a main shear web which extends from the blade root 2A to a halfway position of the blade body 20 and a tip shear web which extends to the near end of the blade body 20. Also, the shear web 36 may be continuously provided from the blade root 2A to the near end of the blade body 20. As a result of providing the shear web 36 also at the tip side of the blade body 20, it is possible to support the load increased by the metal receptor 50 by the shear web 36.

The blade forming member 24 is disposed at the same layer as the spar cap 26, and for instance includes: a lightweight core material formed of a wood such as balsa wood or a foamed plastic such as a polymethacrylimide (PMI) foam; and a fiber-reinforced plastic material such as a glass fiber-reinforced plastic. In the blade forming member 24 according to one exemplary embodiment, at the blade root 2A, a fiber-reinforced plastic is mainly disposed at the inner side of the layers and a lightweight core material is mainly disposed at the outer side of the layers. Also, as shown in Fig. 4, at the blade tip 2B, fiber-reinforced plastics 24A are disposed at the leading edge side and the trailing edge side, and a lightweight core material 24B is disposed between the fiber-reinforced plastics 24A. In one embodiment, the fiber-reinforced plastics 24A include a glass fiber-reinforced plastic whose fibers are arranged in the blade longitudinal direction and are provided continuously from the blade root 2A to the blade tip 2B. The lightweight core material 24B and the spar cap 26 terminate before the end of the blade body 20 at the side closer to the blade root 2A and the fiber-reinforced plastic 24A is disposed near the end of the blade body 20 (see Fig. 5).

In some embodiments, an insulation layer 28 is disposed between the spar cap 26 and the metal foil 32, thereby insulating the metal foil 32 and the spar cap 26. As a result, when lightning hits the metal receptor 50, it is possible to prevent the spar cap 26 from being damaged by high lightning current introduced from the metal foil 32 to the spar cap 26.

As described above, the metal foil 32 extends in the longitudinal direction toward the blade root 2A from the connection part 10 between the metal receptor 50 and the end of the blade body 20. For instance, the metal foil 32 may have a sheet form or a mesh form, and also may be formed of copper on alloyed copper. Also, while Fig. 2 and Fig. 3 illustrate the case where a single metal foil 32 is disposed so as to cover both spar caps 26 of each pair of two spar caps 26 arranged at each of the suction side and the pressure side respectively, the arrangement of the metal foil 32 is not limited to this. For instance, two metal foils 32 may be arranged corresponding to each pair of two spar caps 26 at each of the suction side and the pressure side respectively. In this case, the two metal foils 32 are disposed overlapping with each other at the connection part 10 to the metal receptor 50.

A protection layer 34 is disposed to entirely cover the blade body 20 from the blade root 2A to the end of the blade body 20 for the purpose of preventing damage to the surface of the blade body 20. The protection layer 34 is formed of a glass fiber-reinforced plastic, for instance.

The configuration of the connection part 10 between the blade body 20 and the metal receptor 50 will be described in detail in reference to Fig. 4 and Fig. 5.

At the connection part 10 between the blade body 20 and the metal receptor 50, a fiber-reinforced plastic 24A is fastened to the metal receptor 50 in a state where at least the fiber-reinforced plastic 24A and the metal receptor 50 overlap with each other and also, the end part of the metal foil 32 is electrically connected to the metal receptor 50.

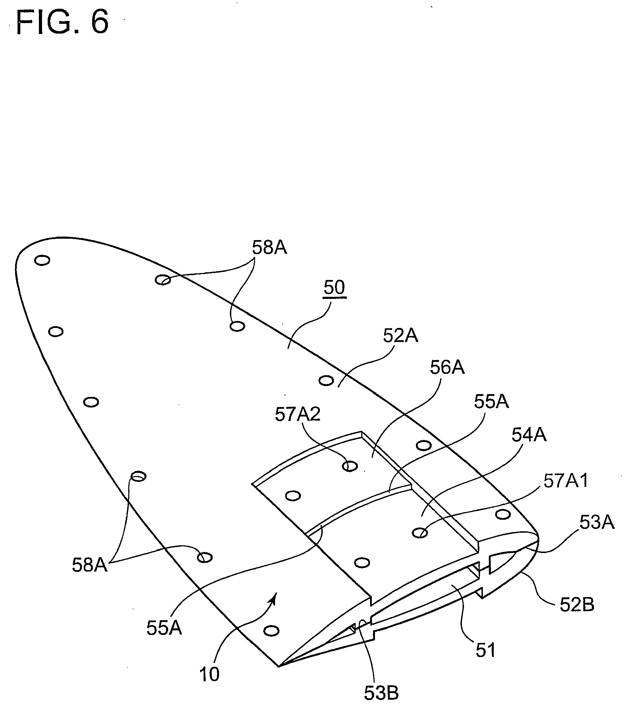

Herein, the exemplary configuration of the metal receptor 50 will be described in reference to Fig. 5 and Fig. 6. Fig. 6 is an oblique perspective view of the metal receptor.

At the outer surface of the end part of the metal receptor 50, first recesses 54A, 54B and second recesses 56A, 56B are provided. Each of the first recesses 54A, 54B and each of the second recesses 56A, 56B is provided adjacent to each other in the blade longitudinal direction via each of steps 55A, 55B, respectively. The first recesses 54A, 54B are disposed at the side of the blade root 2A and the second recesses 56A, 56B are disposed at the side of the blade tip 2B. The first recesses 54A, 54B are formed shallower than the second recesses 56A, 56B. Further, bolt holes 57A1, 57A2 are provided for the first recesses and bolt holes 57B1, 57B2 are provided for the second recesses. While a configuration in which the first recesses 54A, 54B and the second recesses 56A, 56B are provided adjacent to each other in the longitudinal direction is illustrated herein, the configuration of the recesses is not limited to this. For instance, the first recesses 54A, 54B and the second recesses 56A, 56B may be provided adjacent to each other in the blade width direction.

Referring to Fig. 4 and Fig. 5 again, the metal foil 32 is sandwiched between a first metal plate 40 and a second metal plate 42 at the connection part 10. The first metal plate 40 and the second metal plate 42 may extend from the connection part 10 to a halfway position of the blade body 20.

Further, the fiber-reinforced plastic 20 which forms the end of the blade body 20, the second metal plate 42, the metal foil 32 and the first metal plate 40 engage with each of the first recesses 54A, 54B and are fastened together by a bolt 46 screwed to the bolt holes 57A1, 57A2. As a result, the blade body 20 is connected to the metal receptor 50. On this occasion, as at least the fiber-reinforced plastic 24A and the metal receptor 50 which are fastened to each other overlap with each other, it is possible to secure a large contact area between the fiber-reinforced plastic 24A and the metal receptor 50 at the connection part 10, thus maintaining high connection strength for withstanding the bending moment on the wind turbine blade 2, the bending moment being generated by wind load etc received at the wind turbine blade 2. Further, it is possible to have the first recesses 54A, 54B contact the fiber-reinforced plastic 24A with surfaces and thus to secure high connection strength between the blade body 20 and the metal receptor 50.

The metal plate 42, the metal foil 32, and the first metal plate 40 engage with each of the second recesses 56A, 56B and are fastened together by a bolt 48 screwed to each of the bolt holes 57A2, 57B2. As a result, the metal foil 32 is connected to the metal receptor 50 via the metal plate 42. Thus, the metal foil 32 serving as a down conductor and the metal receptor 50 are electrically connected. On this occasion, as the metal foil 32, the metal plate 42, and the metal receptor 50 are fastened together in a state where the metal foil 32 and the metal receptor 50 overlap with each other with the metal plate 42 in between, it is possible to have an electrical connection area of large size between the metal foil 32 and the metal receptor 50, and thus to smoothly direct lightning current received at the metal receptor 50 to the metal foil 32. Further, it is possible to have the second recesses 56A, 56B contact the second metal plate 42 with surfaces and thus to secure electrical connection between the metal foil 32 and the metal receptor 50 via the second metal plate 42.

In one embodiment, an elastic adhesive (not shown) may be filled between the first recesses 54A, 54B and the glass fiber-reinforced plastic 25A.

As a result, it is possible to further improve connection strength between the glass fiber-reinforced plastic 25A and the metal receptor 50 and suppress occurrence of a crack caused by fatigue in the metal receptor 50, the fiber-reinforced plastic 24A and surrounding members at the connection part 10 thanks to the elastic function of the elastic adhesive.

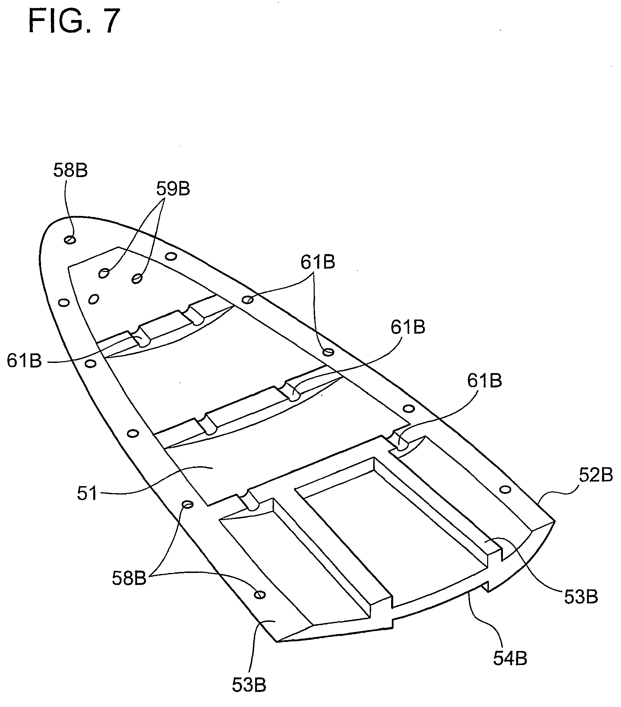

As shown in Fig. 6 and Fig. 7, in one embodiment, the metal receptor 50 may include a suction side portion 52A and a pressure side portion 52B, each of the suction side portion 52A and the pressure side portion 52B having a halved form. Fig. 7 is an oblique perspective view illustrating the inside of the metal receptor 50. As the suction side portion 52A of the metal receptor 50 has a form substantially symmetric to the pressure side portion 52B, only the pressure side portion 52B of a halved form is illustrated in Fig. 7.

The suction side 52A is fastened to the pressure side 52B with a mating surface 53A of the suction side 52A joined to a mating surface 53B of the pressure side portion 52B. A plurality of bolt holes 58A are formed on the mating surface 53A of the pressure suction side 52A, and a plurality of bolt holes (not shown) are formed on the mating surface 53B of the pressure side portion 52B at positions corresponding to the plurality of bolt holes 58A. Accordingly, the suction side portion 52A and the pressure side portion 52B are fastened together by bolts in a state where the mating surfaces 53A, 53B are joined together. As a result of forming the receptor 50 into a halved form as described above, it is possible to easily attach the metal plates 40, 42, the metal foil 32, etc to the metal receptor 50.

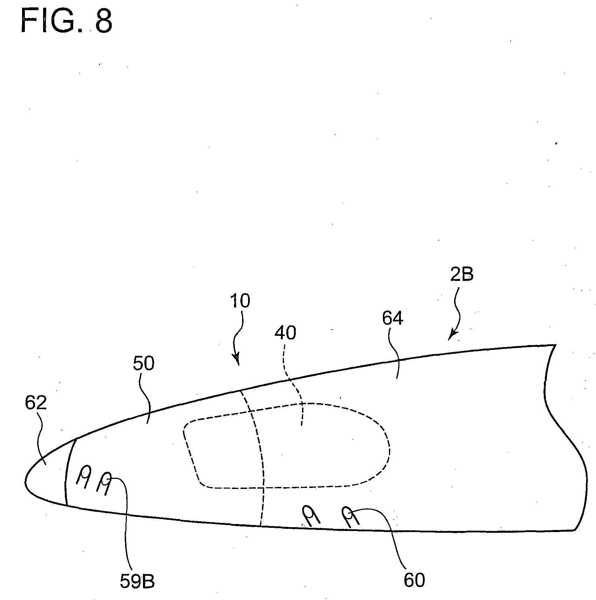

Fig. 8 is an oblique perspective view illustrating a tip side of the wind turbine blade.

As shown in the drawing, in one embodiment, a surface of the metal receptor 50 may include a coating layer 64 where a surface of the metal receptor 50 is coated by an insulator so as to leave an exposed part 62 where the metal receptor 50 is exposed at the blade tip side. As a result, it is possible to make lightning tend to hit the exposed part 62 at the blade tip side of the metal receptor 50, and thus to avoid lightning hitting the blade body 20.

In one embodiment, the wind turbine blade 2 may include the following drain discharging function selectively.

For instance, as shown in Fig. 8, at least one first drain hole 60 is provided for the blade body 20 at the end closer to the connection part 10. Drain pooled inside the blade body 20 is moved toward the blade tip by the centrifugal force which accompanies rotation of the wind turbine blade 2. Thus, by providing the first drain hole 60 at the end of the blade body 20, it is possible to smoothly discharge the drain from the first drain hole 60.

Also, as shown in Figs. 6 and Figs. 7, in the case where each of the mating surfaces 53A, 53B are respectively provided for at least each fringe of the suction side portion 52A and the pressure side portion 53B of the metal receptor 50, the space between the mating surfaces 53A, 53B may not be sealed. As a result, when drain is pooled inside the metal receptor 50, it is possible to discharge the drain from the mating surfaces 53A, 53B.

As shown in Fig. 7, for instance, a concave 51 is provided for the pressure side portion 52B, the concave 51 forming a hollow space within the receptor 50 with a concave of the suction side portion 52A in a state where the pressure side portion 52B is joined with the suction side portion 52A. Also, at least one second drain hole 59B may be provided in communication with the concave 51. The second drain hole 59B is disposed at an end part of the metal receptor 50. In the case where the concave 51 is divided into a plurality of concaves by the mating surfaces 53B, a groove 61B may be provided on the mating surface 53B so that the plurality of concaves 51 are in communication with one another.

With the above configuration, it is possible to smoothly discharge the drain pooled inside the metal receptor 50 from the hollow space formed by the concave 51 through the second drain hole 59B.

The suction side portion 52A may have a similar configuration to the pressure side portion 52B.

As described above, according to the embodiment, as a fiber-reinforced plastic 24A which forms at least a part of the blade body 20 is fastened to the metal receptor 50 which forms the blade tip in a state where at least the fiber-reinforced plastic 24A and the metal receptor 50 overlap with each other, it is possible to improve connection strength between the metal receptor 50 and the blade body 20.

Also, as an end portion of the metal foil 32 is electrically connected to the metal receptor 50 at the connection part between the metal receptor and the blade body 20, it is possible to improve reliability of electric connection between the metal foil 32 serving as a down conductor and the metal receptor 50.

Embodiments of the present invention were described in detail above, but the present invention is not limited thereto, and various amendments and modifications may be implemented within the scope of the present invention.

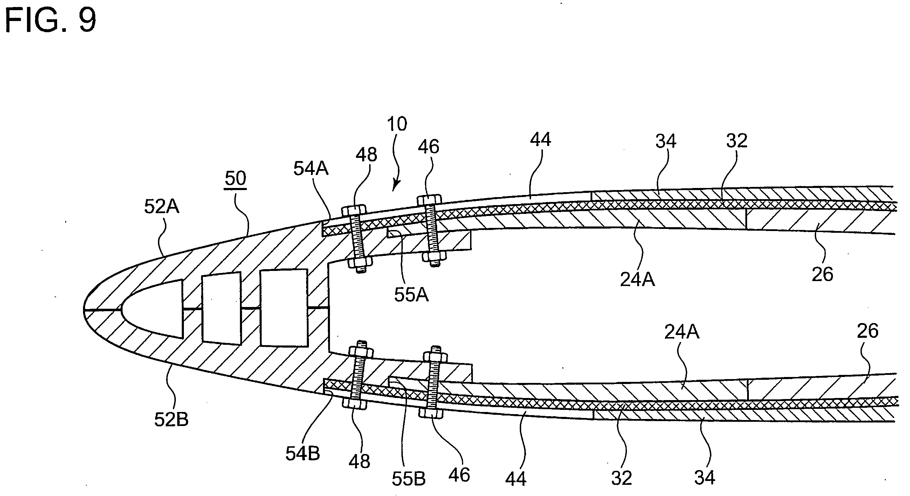

For instance, while the above embodiment illustrates a configuration where the metal foil 32 is sandwiched between the first metal plate 40 and the second metal plate 42 and fastened to the metal receptor 50, the metal plates may not be provided between the metal 32 foil and the metal receptor 50 as shown in Fig. 9. In this case, a metal plate 44 is disposed at the opposite side (the side of the outer layers) of the metal receptor 50 across the metal foil 32, and then the metal receptor 50, the metal foil 32, and the metal plate 44 are fastened together. As a result, as the metal foil 32 is forced against the metal receptor 50 by the metal plate 44, it is possible to fix the metal foil 32 stably and to secure electric connection between the metal foil 32 and the metal receptor 50 via the metal plate 44. Also, only the metal foil 32 may be fastened to the metal receptor 50 providing neither of the first metal plate 40 nor the second metal plate 42 shown in Fig. 5 (not shown in the drawings).

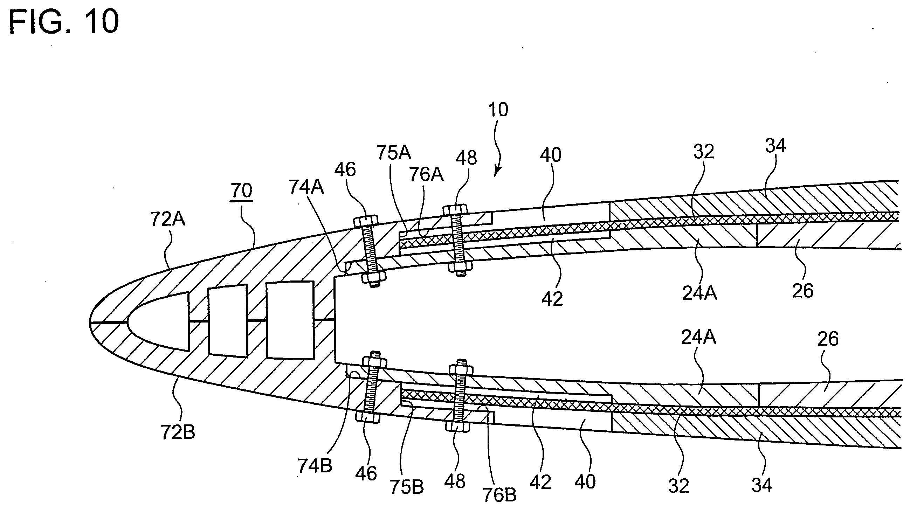

Further, as shown in Fig. 10, first recesses 74A, 74B and second recesses 76A, 76B may be provided at an inner surface of the end part the metal receptor 70 via steps 75A, 75B. The metal receptor 70 is composed of a suction side portion 72A and a pressure side portion 72B. The first recesses 74A, 74B are provided adjacent to the second recesses 76A, 76B via steps 75A, 75B and are shallower than the second recesses 76A, 76B. On this occasion, the first recesses are formed at the inner side of the second recesses in the metal receptor 70. A fiber-reinforced plastic 24A engages with the first recesses 74A, 74B and is fastened to the metal receptor 70 by a bolt 46. The fiber-reinforced plastic 24A, and the first metal plate 40 and the second metal plate 42 with the metal foil 32 sandwiched therein engage with the second recesses 76A, 76B, and are fastened to the metal receptor 70 by a bolt 48. Further, from the perspective of reducing aerodynamic drag at the surface of the wind turbine blade 2, the outer surface of the metal receptor 70 and the outer surface of the first metal plate 40 may be configured to form substantially one surface. In a specific exemplary configuration, a step corresponding to the thickness of the metal receptor 70 at the second recesses 76A, 76B is provided for the metal plate 40. With this step a surface of an end of the first metal plate 40 engages with the second recesses 76A, 76B, and a surface of the other end of the first metal plate 40 forms the substantially one surface with the metal receptor 70 via the step. Further, in another configuration, a part corresponding to the second recesses 76A, 76B of the metal receptor 70 may extend to the end of the blade body 20 so as to cover the metal plate 40 entirely. As a result, it is possible to form a surface of the blade body 20 in a smooth fashion, thus reducing aerodynamic drag.

### [Reference Signs list]

- 1: Wind turbine generator
- 2: Wind turbine blade
- 2A: Blade root
- 2B: Blade tip
- 3: Hub
- 4: Nacelle
- 5: Tower
- 8: Down conductor
- 10: Connection part
- 20: Blade body
- 22: Inner blade reinforcement part
- 24: Blade forming part
- 24A: Fiber-reinforced plastic
- 24B: Lightweight core material
- 26: Spar cap
- 28: Insulation layer
- 30: Outer blade reinforcement part
- 32: Metal foil
- 34: Protection layer
- 36: Shear web
- 40: First metal plate
- 42: Second metal plate
- 44: Metal plate
- 46, 48: Bolt
- 50, 70: Metal receptor
- 51: Concave
- 52A, 72A: Suction side portion
- 52B, 72B: Pressure side portion
- 53A, 53B: Mating surfaces
- 54A, 54B, 74A, 74B: First recess
- 55A, 55B, 75A, 75B: Step
- 56A, 56B, 76A, 76B: Second recess
- 57A1, 57A2, 57B1, 57B2: Bolt hole
- 58A, 58B: Bolt hole
- 59A, 59B, 60: Drain hole
- 61B: Groove
- 62: Exposed part
- 64: Coating layer

## Claims

1. A wind turbine blade (2) comprising:
a blade body (20) extending from a blade root (2A) along a blade longitudinal direction;
a metal receptor (50) which is connected to an end of the blade body opposite to the blade root and which forms a blade tip (2B); and
a metal foil (32) which extends from a connection part (10) of the metal receptor (50) and the end of the blade body (20) toward the blade root along the blade longitudinal direction and which is configured to direct lightning current from the metal receptor toward the blade root,
**characterized in that**, at the connection part,
a fiber-reinforced plastic (24A) which forms at least a part of the blade body (20) is fastened to the metal receptor (50) in a state where at least the fiber-reinforced plastic and the metal receptor overlap with each other, while an end portion of the metal foil (32) is electrically connected to the metal receptor.

2. The wind turbine blade according to claim 1, further comprising a first metal plate (40) which is fastened to the metal receptor (50) together with the end portion of the metal foil (32) in a state where the first metal plate overlaps with the end portion of the metal foil and the metal receptor at an opposite side of the metal receptor across the metal foil.

3. The wind turbine blade according to claim 2, further comprising a second metal plate (42) which is fastened to the metal receptor (50) together with the first metal plate and the metal foil (32), the second metal plate being disposed between the metal foil and the metal receptor at the connection part (10).

4. The wind turbine blade according to claim 3,
wherein the first metal plate (40) and the second metal plate (32) extend from the connection part (10) to a halfway position of the blade body (20), and
wherein, at the connection part, the fiber-reinforced plastic (24A) is fastened to the metal receptor (50) together with the metal foil (32), the first metal plate (40), and the second metal plate (42).

5. The wind turbine blade according to claim 4,
wherein the metal receptor, the fiber-reinforced plastic, the metal foil, the first metal plate, and the second metal plate are fastened together by a bolt (46).

6. The wind turbine blade according to claim 4 or 5,
wherein a first recess (54A, 54B) and a second recess (56A, 56B) are formed at an end part of the metal receptor (50), the second recess being disposed adjacent to the first recess across a step (55A, 55B) and being shallower than the first recess,
wherein the fiber-reinforced plastic (24A), the metal foil (32), the first metal plate (40) and the second metal plate (42) together engage with the first recess (54A, 54B), and are fastened to the metal receptor (50) at the first recess (54A, 54B), and
wherein the metal foil, the first metal plate and the second metal plate together engage with the second recess, and are fastened to the metal receptor at the second recess (56A, 56B).

7. The wind turbine blade according to claim 6, further comprising an elastic adhesive filled between the first recess (54A, 54B) and the fiber-reinforced plastic (24A).

8. The wind turbine blade according to any one of claims 1 to 7,
wherein at least one first drain hole (60) is formed at the end of the blade body (20) closer to the connection part (10).

9. The wind turbine blade according to any one of claims 1 to 8,
wherein the metal receptor (50) includes a suction side portion (52A) and a pressure side portion (52B), each of the suction side portion and the pressure side portion having a halved form, and
wherein the suction side portion and the pressure side portion are fastened together.

10. The wind turbine blade according to claim 9,
wherein the metal receptor (50) has a hollow space between the suction side portion (52A) and the pressure side portion (52B), and
wherein at least one second drain hole (59A) is formed at a tip part of the metal receptor (50), and is in communication with the hollow space.

11. The wind turbine blade according to any of claims 1 to 10,
wherein a surface of the metal receptor (50) is coated by an insulator so that a tip part of the metal receptor is exposed.

12. The wind turbine blade according to any of claims 1 to 11,
wherein at least one of the metal receptor (50) or the metal foil (32) is formed of copper or alloyed copper.

13. The wind turbine blade according to any one of claims 1 to 12,
wherein the fiber-reinforced plastic (24A) is provided at each of a suction side and a pressure side of the blade body (20),
wherein the blade body further includes a shear web (36) which is disposed between the fiber-reinforced plastic (24A) at the suction side and the fiber-reinforced plastic at the pressure side, and which extends to the connection part (10) along the blade longitudinal direction, and
wherein an end face at a blade body side of the metal receptor (50) is in contact with a tip face of the shear web.

14. The wind turbine blade according to any one of claims 1 to 13,
wherein the blade body is covered by a protection layer (34) formed of fiber-reinforced plastic.

15. A wind turbine generator (1) comprising the wind turbine blade (2) according to any one of claims 1 to 14.

## Patentansprüche

1. Windenergieanlagen-Rotorblatt (2), umfassend:
einen Rotorblattkörper (20), der sich von einer Rotorblattwurzel (2A) entlang einer Rotorblattlängsrichtung erstreckt,
einen metallischen Rezeptor (50), der mit einem der Rotorblattwurzel entgegengesetzten Ende des Rotorblattkörpers verbunden ist und der eine Rotorblattspitze (2B) bildet, und
eine Metallfolie (32), die sich von einem Verbindungsteil (10) des metallischen Rezeptors (50) und des Endes des Rotorblattkörpers (20) entlang der Rotorblattlängsrichtung in Richtung auf die Rotorblattwurzel erstreckt und die dazu ausgebildet ist, Blitzschlagstrom von dem metallischen Rezeptor in Richtung der Rotorblattwurzel zu lenken,
**dadurch gekennzeichnet, dass** an dem Verbindungsteil
ein faserverstärkter Kunststoff (24A), welcher mindestens einen Teil des Rotorblattkörpers (20) bildet, an dem metallischen Rezeptor (50) in einem Zustand befestigt ist, wobei mindestens der faserverstärkte Kunststoff und der metallische Rezeptor einander überlappen, während ein Endabschnitt der Metallfolie (32) mit dem metallischen Rezeptor elektrisch verbunden ist.

2. Windenergieanlagen-Rotorblatt nach Anspruch 1, ferner umfassend eine erste Metallplatte (40), die gemeinsam mit dem Endabschnitt der Metallfolie (32) an dem metallischen Rezeptor (50) in einem Zustand befestigt ist, in dem sich die erste Metallplatte mit dem Endabschnitt der Metallfolie und dem metallischen Rezeptor auf einer der Metallfolie gegenüberliegenden Seite des metallischen Rezeptors überlappt.

3. Windenergieanlagen-Rotorblatt nach Anspruch 2, ferner umfassend eine zweite Metallplatte (42), die an dem metallischen Rezeptor (50) gemeinsam mit der ersten Metallplatte und der Metallfolie (32) befestigt ist, wobei die zweite Metallplatte an dem Verbindungsteil (10) zwischen der Metallfolie und dem metallischen Rezeptor angeordnet ist.

4. Windenergieanlagen-Rotorblatt nach Anspruch 3,
wobei sich die erste Metallplatte (40) und die zweite Metallplatte (32) von dem Verbindungsteil (10) zu einer Position in der Hälfte des Rotorblattkörpers (20) erstrecken, und
wobei an dem Verbindungsteil der faserverstärkte Kunststoff (24A) gemeinsam mit der Metallfolie (32), der ersten Metallplatte (40) und der zweiten Metallplatte (42) an dem metallischen Rezeptor (50) befestigt ist.

5. Windenergieanlagen-Rotorblatt nach Anspruch 4,
wobei der metallische Rezeptor, der faserverstärkte Kunststoff, die Metallfolie, die erste Metallplatte und die zweite Metallplatte durch eine Schraube (46) aneinander befestigt sind.

6. Windenergieanlagen-Rotorblatt nach Anspruch 4 oder 5,
wobei an einem Endteil des metallischen Rezeptors (50) eine erste Ausnehmung (54A, 54B) und eine zweite Ausnehmung (56A, 56B) ausgebildet sind, wobei die zweite Ausnehmung über eine Stufe (55A, 55B) der ersten Ausnehmung benachbart angeordnet ist und weniger tief als die erste Ausnehmung ist,
wobei der faserverstärkte Kunststoff (24A), die Metallfolie (32), die erste Metallplatte (40) und die zweite Metallplatte (42) gemeinsam mit der ersten Ausnehmung (54A, 54B) in Eingriff stehen und an der ersten Ausnehmung (54A, 54B) an dem metallischen Rezeptor (50) befestigt sind, und
wobei die Metallfolie, die erste Metallplatte und die zweite Metallplatte gemeinsam mit der zweiten Ausnehmung in Eingriff stehen und an der zweiten Ausnehmung (56A, 56B) an dem metallischen Rezeptor befestigt sind.

7. Windenergieanlagen-Rotorblatt nach Anspruch 6, ferner umfassend einen elastischen Klebstoff, der zwischen der ersten Ausnehmung (54A, 54B) und dem faserverstärkten Kunststoff (24A) eingefüllt ist.

8. Windenergieanlagen-Rotorblatt nach einem beliebigen der Ansprüche 1 bis 7,
wobei mindestens ein erstes Entwässerungsloch (60) an dem Ende des Rotorblattkörpers (20), das näher bei dem Verbindungsteil (10) liegt, ausgebildet ist.

9. Windenergieanlagen-Rotorblatt nach einem beliebigen der Ansprüche 1 bis 8,
wobei der metallische Rezeptor (50) einen Saugseitenabschnitt (52A) und einen Druckseitenabschnitt (52B) umfasst, wobei sowohl der Saugseitenabschnitt als auch der Druckseitenabschnitt eine halbierte Form aufweisen, und
wobei der Saugseitenabschnitt und der Druckseitenabschnitt aneinander befestigt sind.

10. Windenergieanlagen-Rotorblatt nach Anspruch 9,
wobei der metallische Rezeptor (50) zwischen dem Saugseitenabschnitt (52A) und dem Druckseitenabschnitt (52B) einen Hohlraum aufweist, und
wobei mindestens ein zweites Entwässerungsloch (59A) an einem Spitzenteil des metallischen Rezeptors (50) ausgebildet ist und mit dem Hohlraum kommuniziert.

11. Windenergieanlagen-Rotorblatt nach einem beliebigen der Ansprüche 1 bis 10,
wobei eine Oberfläche des metallischen Rezeptors (50) mit einem Isoliermaterial beschichtet ist, derart, dass ein Spitzenteil des metallischen Rezeptors freiliegt.

12. Windenergieanlagen-Rotorblatt nach einem beliebigen der Ansprüche 1 bis 11,
wobei mindestens eines aus der Gruppe umfassend den metallischen Rezeptor (50) und die Metallfolie (32) aus Kupfer oder legiertem Kupfer gebildet ist.

13. Windenergieanlagen-Rotorblatt nach einem beliebigen der Ansprüche 1 bis 12,
wobei der faserverstärkte Kunststoff (24A) sowohl an einer Saugseite wie auch an einer Druckseite des Rotorblattkörpers (20) vorgesehen ist,
wobei der Rotorblattkörper ferner einen Schersteg (36) umfasst, der zwischen dem faserverstärkten Kunststoff (24A) an der Saugseite und dem faserverstärkten Kunststoff an der Druckseite angeordnet ist und der sich die Rotorblattlängsrichtung entlang zu dem Verbindungsteil (10) erstreckt, und
wobei eine Endfläche an einer Rotorblattkörperseite des metallischen Rezeptors (50) mit einer Spitzenfläche des Scherstegs in Kontakt steht.

14. Windenergieanlagen-Rotorblatt nach einem beliebigen der Ansprüche 1 bis 13,
wobei der Rotorblattkörper von einer Schutzschicht (34) bedeckt ist, die aus faserverstärktem Kunststoff gebildet ist.

15. Windenergieanlage (1), welche das Windenergieanlagen-Rotorblatt (2) nach einem beliebigen der Ansprüche 1 bis 14 umfasst.

## Revendications

1. Pale d'éolienne (2) comportant :
un corps de pale (20) s'étendant depuis un pied de pale (2A) le long d'une direction longitudinale de pale ;
un récepteur en métal (50) qui est relié à une extrémité du corps de pale opposée au pied de pale et qui forme un bout de pale (2B) ; et
une feuille métallique (32) qui s'étend depuis une partie de connexion (10) du récepteur en métal (50) et l'extrémité du corps de pale (20) vers le pied de pale le long de la direction longitudinale de pale et qui est configurée pour diriger un courant de foudre depuis le récepteur en métal vers le pied de pale,
**caractérisée en ce que**, au niveau de la partie de connexion,
une matière plastique renforcée de fibres (24A) qui forme au moins une partie du corps de pale (20) est fixée sur le récepteur en métal (50) dans un état où au moins la matière plastique renforcée de fibres et le récepteur en métal se chevauchent l'un l'autre, alors qu'une partie d'extrémité de la feuille métallique (32) est électriquement reliée au récepteur en métal.

2. Pale d'éolienne selon la revendication 1, comportant en outre une première plaque de métal (40) qui est fixée sur le récepteur en métal (50) avec la partie d'extrémité de la feuille métallique (32) dans un état où la première plaque de métal chevauche la partie d'extrémité de la feuille métallique et le récepteur en métal au niveau d'un côté opposé du récepteur en métal à travers la feuille métallique.

3. Pale d'éolienne selon la revendication 2, comportant en outre une deuxième plaque de métal (42) qui est fixée sur le récepteur en métal (50) avec la première plaque de métal et la feuille métallique (32), la deuxième plaque de métal étant disposée entre la feuille métallique et le récepteur en métal au niveau de la partie de connexion (10).

4. Pale d'éolienne selon la revendication 3, dans laquelle la première plaque de métal (40) et la deuxième plaque de métal (32) s'étendent depuis la partie de connexion (10) jusqu'à une position à mi-chemin du corps de pale (20), et
dans laquelle, au niveau de la partie de connexion, la matière plastique renforcée de fibres (24A) est fixée sur le récepteur en métal (50) avec la feuille métallique (32), la première plaque de métal (40), et la deuxième plaque de métal (42).

5. Pale d'éolienne selon la revendication 4, dans laquelle le récepteur en métal, la matière plastique renforcée de fibres, la feuille métallique, la première plaque de métal, et la deuxième plaque de métal sont fixés ensemble par un boulon (46).

6. Pale d'éolienne selon la revendication 4 ou 5, dans laquelle un premier renfoncement (54A, 54B) et un deuxième renfoncement (56A, 56B) sont formés au niveau d'une partie d'extrémité du récepteur en métal (50), le deuxième renfoncement étant disposé de façon adjacente au premier renfoncement à travers un palier (55A, 55B) et étant moins profond que le premier renfoncement,
dans laquelle la matière plastique renforcée de fibres (24A), la feuille métallique (32), la première plaque de métal (40) et la deuxième plaque de métal (42) coopèrent ensemble avec le premier renfoncement (54A, 54B), et sont fixées sur le récepteur en métal (50) au niveau du premier renfoncement (54A, 54B), et
dans laquelle la feuille métallique, la première plaque de métal et la deuxième plaque de métal coopèrent ensemble avec le deuxième renfoncement, et sont fixées sur le récepteur en métal au niveau du deuxième renfoncement (56A, 56B).

7. Pale d'éolienne selon la revendication 6, comportant en outre un adhésif élastique versé entre le premier renfoncement (54A, 54B) et la matière plastique renforcée de fibres (24A).

8. Pale d'éolienne selon l'une quelconque des revendications 1 à 7, dans laquelle au moins un premier trou d'évacuation (60) est formé à l'extrémité du corps de pale (20) plus proche de la partie de connexion (10).

9. Pale d'éolienne selon l'une quelconque des revendications 1 à 8, dans laquelle le récepteur en métal (50) comprend une partie du côté aspiration (52A) et une partie du côté pression (52B), chacune de la partie du côté aspiration et de la partie du côté pression ayant une forme divisée en deux, et
dans laquelle la partie du côté aspiration et la partie du côté pression sont fixées ensemble.

10. Pale d'éolienne selon la revendication 9, dans laquelle le récepteur en métal (50) a un espace creux entre la partie du côté aspiration (52A) et la partie du côté pression (52B), et
dans laquelle au moins un deuxième trou d'évacuation (59A) est formé au niveau d'une partie d'extrémité du récepteur en métal (50), et est en communication avec l'espace creux.

11. Pale d'éolienne selon l'une quelconque des revendications 1 à 10, dans laquelle une surface du récepteur en métal (50) est revêtue d'un isolant de telle sorte qu'une partie d'extrémité du récepteur en métal est exposée.

12. Pale d'éolienne selon l'une quelconque des revendications 1 à 11, dans laquelle au moins un du récepteur en métal (50) ou de la feuille métallique (32) est constitué de cuivre ou de cuivre allié.

13. Pale d'éolienne selon l'une quelconque des revendications 1 à 12, dans laquelle la matière plastique renforcée de fibres (24A) est prévue au niveau de chacun d'un côté d'aspiration et d'un côté de pression du corps de pale (20),
dans laquelle le corps de pale comprend en outre une âme de cisaillement (36) qui est disposée entre la matière plastique renforcée de fibres (24A) sur le côté d'aspiration et la matière plastique renforcée de fibres sur le côté de pression, et qui s'étend jusqu'à la partie de connexion (10) le long de la direction longitudinale de pale, et
dans laquelle une face d'extrémité au niveau d'un côté de corps de pale du récepteur en métal (50) est en contact avec une face de bout de l'âme de cisaillement.

14. Pale d'éolienne selon l'une quelconque des revendications 1 à 13, dans laquelle le corps de pale est recouvert par une couche de protection (34) constituée de matière plastique renforcée de fibres.

15. Eolienne (1) comportant la pale d'éolienne (2) selon l'une quelconque des revendications 1 à 14.
